# EUROPÄISCHE PATENTANMELDUNG

(11) **EP 2 592 373 A2**
(43) Veröffentlichungstag der Anmeldung: **15.05.2013**
(21) Anmeldenummer: 12192015.1
(22) Anmeldetag: 09.11.2012
(51) Int. Cl.: F26B 3/02, F26B 19/00

(54) **Eindicker**

(30) Priorität: 09.11.2011 DE 102011055190
(71) Anmelder: Wenner, Christian, 84513 Töging a. Inn (DE); Rypacek, Fabian, 84524 Neuötting (DE)
(72) Erfinder: Wenner, Christian, 84513 Töging a. Inn (DE); Rypacek, Fabian, 84524 Neuötting (DE)
(74) Vertreter: K & H Bonapat

(57) **Zusammenfassung**

Die Erfindung betrifft einen Eindicker (1) eines flüssigen Substrates mit Feststoffanteil mittels einem Warm-/Heißgas als Trocknungsgas (7), das zusammen mit dem Substrat eine Eindickkammer (2) durchströmt. Die Erfindung ist dadurch gekennzeichnet, dass eine das Substrat beschleunigende Pumpe (15) vorgesehen ist, mit der das Substrat über mindestens eine Verteileinrichtung (14) in die mit Trocknungsluft belüftete Eindickkammer (2) einbringbar ist.

## Beschreibung

Die Erfindung betrifft eine verfahrenstechnische Vorrichtung zum Eindicken von Flüssigsubstraten, wie zum Beispiel Gülle oder Gärrest.

Zur Eindickung von flüssigen Substraten werden im Stand der Technik entweder Eindickungsanlagen, die mit Warm-/Heißlufttemperaturen von etwa 40°C bis 200°C arbeiten, oder Eindampfungsanlagen verwendet, die atmosphärisch oder im Vakuum, mit einer Wärmezufuhr über beheizte Flächen betrieben werden. Bei solchen flüssigen Substraten, die in der Regel einen Trocken-Substanzgehalt von unter 10% haben, kann es sich um flüssige Schlämme, Gülle oder Gärsubstrat aus Biogasanlagen handeln.

In den letzten Jahren wurde die Entsorgung von Schlämmen, wie z.B. Klärschlamm, Gülle oder Gärresten immer schwieriger. Bei großen Substratmengen und steigenden Entfernungen zu Entsorgungseinrichtungen steigen die Transportkosten erheblich. Oft gibt es nur geringe Aufnahmekapazitäten auf der Entsorgungsseite. Landwirtschaftliche Flächen zur Ausbringen werden knapp. Oft dürfen Substrate mit bestimmten Inhaltstoffen gar nicht mehr ausgebracht werden. Mit der Eindickung - wie auch bei der Eindampfung oder Trocknung - wird das Transportvolumen und damit die Anzahl der erforderlichen Entsorgungstransporte reduziert. Bei nährstoffreichen Substraten, wie z.B. Gärresten aus Biogasanlagen, kann durch eine Eindickung die Konzentration der Nährstoffe im Substrat gesteigert und so die Düngewirkung erhöht werden. Auch kann es die Eindickung ermöglichen, dass durch sie weitere Schritte der Volumenreduktion und Aufkonzentration, z.B. der Trocknung, physikalisch erst möglich werden. Bei der Eindickung wird ein höherwertiges, weil konzentrierteres Düngemittel produziert. Die völlige Eintrocknung des Gärsubstrates wäre in vielen Fällen sicherlich sinnvoll, scheitert jedoch letztl ich am beschränkten Wärmeangebot.

Nachfolgend wird beispielhaft die Eindickung von Gärresten aus einer landwirtschaftlichen Biogasanlage betrachtet.

Gärreste aus einer landwirtschaftlichen Biogasanlage weisen in der Regel Trockensubstanzgehalte von 4 bis 8% auf. Die Trockensubstanz ist zum Teil gelöst, zum Teil aber faserig und sie zeigt eine inhomogene Größenverteilung. Zum Teil sind noch Substanzen wie Eiweiße oder Fette enthalten, die zum Verkleben von Oberflächen führen. Herkömmliche Eindickungsanlagen oder Eindampfungsanlagen sind dadurch gekennzeichnet, dass das einzudickende Substrat beim Zusammentreffen mit dem die Feuchtigkeit aufnehmenden Gas auf Oberflächen geführt wird, die ein Durchströmen ebendieses Gases ermöglichen müssen. Durch diese Kontaktierung von Gas und Substrat kommt es zum Einen zu einem Wärmeübertrag vom Gas auf das Substrat, und zu einem Übertrag des wässrigen Anteils vom Substrat auf das Gas. Die besagten Oberflächen sind zwecks Wirkungsgraderhöhung oft beheizt oder werden mit Warmluft umspült. So findet beispielsweise der Wärmeübertrag in Eindampfern an beheizten Wärmetauscherflächen, meist Platten- oder Rohrbündelwärmetauschern, statt. Herkömmliche Eindicker schaufeln das Substrat mit meist komplizierten Paddelwerken durch den Warmluftstrom. Die bezeichneten Oberflächen neigen aufgrund der klebrigen Eigenschaften des Substrats zu Anbackungen und Verkrustungen. Oft sind diese nur schwierig und unter hohem Wartungsaufwand zu reinigen und nur chemisch vor weiteren Ablagerungen zu schützen. Durch längerfristig immer öfter auftretende Verkrustungen wird nach und nach die Funktion der Eindickung bzw. Eindampfung eingeschränkt, weil sich die Oberflächen zusetzen, die für den Durchtrag der Trocknungsluft durchlässig sein müssen.

Ziel der Erfindung ist es, diese Problematik durch weitgehenden Verzicht auf schwierig zu wartende Oberflächen abzustellen.

Gelöst wird diese Aufgabe durch eine Eindickungsvorrichtung, bzw. einen Eindicker gemäß Anspruch 1. Vorteilhafte Ausführungsformen sind in den Unteransprüchen beschrieben.

Kern der Erfindung liegt nun darin, das Substrat mit einer Verteileinrichtung in der Eindickkammer aufzufächern und darin zu verteilen. Eine solche Verteilung kann bis zu einem Versprühen des Substrates mittels Düse reichen. Hierzu wird das Substrat mit einer vorgeschalteten Pumpe über die Düse in die Eindickkammer eingetragen und darin vernebelt.

Je nach Feststoffgehalt kann als Verteileinrichtung alternativ auch ein Prallteller zum Einsatz kommen. Dieser ist beispielsweise aus der Landwirtschaftstechnik zum Ausbringen von Gülle auf dem Feld bekannt. Er dient bei der vorliegenden Erfindung gleichermaßen wie die Düse zum Auffächern des Substrates, d.h. zum Erreichen einer möglichst hohen Verteilung des Substrates über einer gegebenen Fläche.

Dieser in der Eindickkammer aufgefächerte, bzw. verteilte Substratstrahl tritt hierin mit dem Trocknungsgas zusammen. Dabei erfolgt der Stoffübergang des wässrigen Anteils aus dem Substrat in das Trocknungsgas im Flug des Substrates, d.h. beim Durchtritt von beispielsweise der Trocknungswarmluft durch einen Substratnebel bzw. einen Substratfilm.

Da das Substrat mittels der Pumpe befördert wird, wird die zur Auffächerung des Substrates verwendete Verteileinrichtung durch den mit Kraft beaufschlagten Substrat-Durchstrom vom Substrat ständig befreit. Ein Zusetzen von das Substrat in der Eindickkammer befördernden Oberflächen - wie sich das im Stand der Technik vollzieht - ist nicht gegeben.

An einem Ende der Eindickkammer kann hierin eine Zwischenwand oder ein Prallblech vorgesehen sein, mit dem der mit Kraft beaufschlagte Substratschwall gebremst wird. Ein Verunreinigen dieses Prallblechs hat dann jedoch keinerlei Auswirkung auf die Funktionsweise des erfindungsgemäßen Eindickers, da das Prallblech lediglich einem Abbremsen der zuvor bereits aufgefächerten Substratcharge dient. Mit anderen Worten findet ein Übertrag des wässrigen Substrat-Anteils in die Trocknungsluft nicht durch die Zwischenwand statt - sondern entweder vor einem Auftreffen des Substrates auf die Zwischenwand oder nachfolgend, d.h. wenn das Substrat von der Zwischenwand abregnet.

Gemäß einer vorteilhaften Ausführungsform ist die Zwischenwand in der Eindickkammer derart im Durchstrombereich des Trocknungsgases angeordnet, dass die Zwischenwand den Durchstrom an Trocknungsgas hemmt. Dies erhöht den Übertrag des wässrigen Anteils vom Substrat auf das Trocknungsgas.

So kann die Zwischenwand in vorteilhafter Weise einen verjüngten Durchgangsspalt für das Trocknungsgas zum Boden der Eindickkammer hin bilden.

Ferner ist es vorteilhaft, dass die Zwischenwand justierbar in der Eindickkammer gehalten ist. Diese Justage kann ein Verkippen der Zwischenwand und/oder ein Verschieben beinhalten. Sodann ist es möglich, zum Einen das Durchström-Volumen an Trocknungsgas einzustellen, bzw. obigen Durchgangspalt in seiner Höhe justieren. Dies ist insofern dann relevant, wenn auf dem Boden der Eindickkammer Substrat vorliegt, dass sich in der Eindickkammer auf den Boden abregnete und hier einen Kammersumpf bildet. Je nach Höhe dieses Substratstandes des Kammersumpfes in der Eindickkammer kann dann die Zwischenwand verfahren werden, um eine gewünschte Größe des besagten Durchgangsspaltes für Trocknungsgas zu gewährleisten.

Um das sich im Kammersumpf befindliche Substrat weiter einzudicken, kann vorteilhaft eine Rezirkulations- oder Umwälzpumpe vorgesehen sein, mit der das Substrat vom Boden der Eindickkammer zurück an die Verteileinrichtung befördert wird. Dann ist es auch möglich, die Förderpumpe zum Austragen des Substrats durch die Verteileinrichtung in die Eindickkammer mit der Rezirkulationspumpe zu kombinieren und eine einzelne Umwälzpumpe für beide Zwecke vorzusehen.

Die Erfindung kann, wie herkömmliche Eindicker auch, Warmluft als Trocknungsgas nutzen. Dann wird Umgebungsluft erwärmt und durch die Eindickkammer befördert.

Die einfache Anlagenkonfiguration ist wartungsarm und kann einfach bedient werden. Die Eindickkammer ist leicht zugänglich und kann bei Bedarf auf einfache Weise gereinigt werden. Als Rohrleitungs- und Pumpentechnik lässt sich ein herkömmliches System implementieren, das sich bereits in der Gülletechnik und auf Biogasanlagen bewährt hat. Dadurch werden Betriebs - und Personalkosten minimiert.

Mit der Erfindung lässt sich bei geringer Investition und geringem Aufwand ein gleichmäßig gutes Trocknungsergebnis erzielen.

Durch die Nutzungsmöglichkeit von Abwärme aus Kraft-Wärme-Kopplung oder Kraftwerken kann diese Art der Trocknung einen effektiven Beitrag zur Energieeinsparung leisten.

Im Folgenden wird die Erfindung beispielhaft anhand einer Ausführung erläutert, wie sie in den beigefügten Zeichnungen gezeigt ist. Dieses Beispiel betrifft eine Eindickungsanlage für Gärreste aus einer landwirtschaftlichen Biogasanlage. Zur Warmluftzeugung wird die bei der Stromerzeugung aus Biogas anfallende Abwärme genutzt. Die Eindickungsanlage wird in der Nähe einer Biogasanlage mit Blockheizkraftwerk zur Stromerzeugung aufgestellt. Alternativ kann die Eindickungsanlage auch über eine Fernwärmeleitung mit Wärme versorgt werden.

In den Zeichnungen zeigt
- Fig. 1: eine schematische Darstellung des erfindungsgemäßen Eindickers in Seitenansicht mit Kennzeichnung der Funktionsbereiche, der Luftführung sowie der Substratströme;

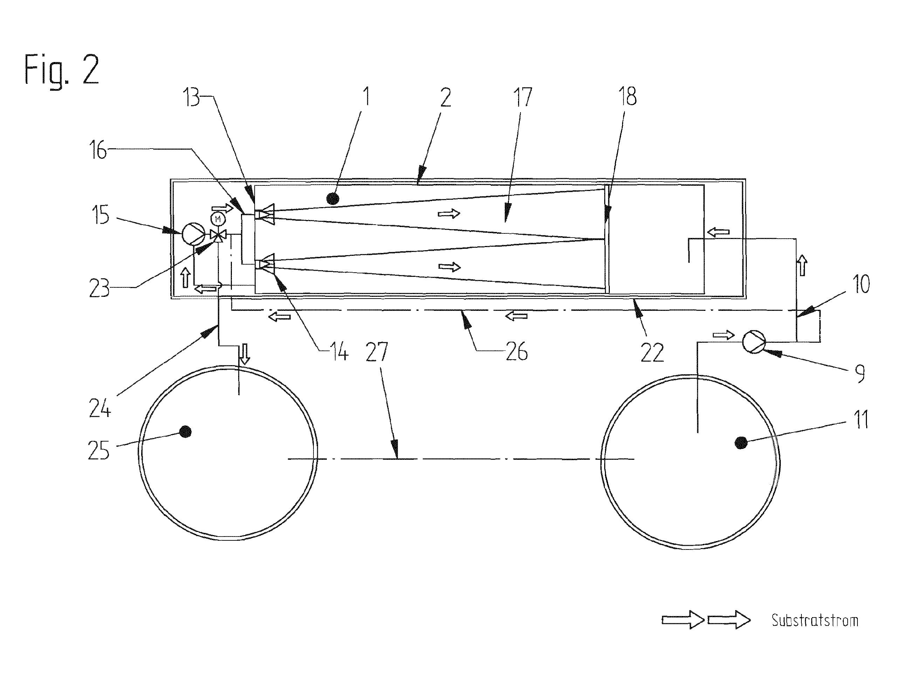

- Fig. 2: eine schematische Darstellung des erfindungsgemäßen Eindickers in Draufsicht mit Kennzeichnung der Funktionsbereiche und der Substratströme;
- Fig. 3: Varianten der Ausführung der Zwischenwand zur Steigerung des Feuchteübertrags vom Substrat auf das Trockungsgas;
- Fig. 3a, 3b und 3c Details zum Durchgangsspalt für das Trocknungsgas.

Die Eindickungsanlage 1 weist eine Eindickkammer 2 auf, an deren Ende ein Abluftventilator 3 angeordnet ist. Der Abluftventilator 3 erzeugt in der Eindickkammer einen Unterdruck, der bewirkt, dass über eine Zuluftleitung 4 Luft aus der Umgebung 5 angesaugt wird und nach der Erwärmung im Wärmetauscher 6 als Trocknungsluft 7 der Eindickkammer 2 zuströmt. Die Luftmenge kann z.B. über einen Frequenzumrichter (hier nicht dargestellt) für den Ventilator geregelt sein.

Die angesaugte Umgebungsluft wird über den Warmwasser-Luft-Wärmetauscher 6 auf die gewünschte Trocknungslufttemperatur erwärmt. Der Wärmetauscher ist über eine Warmwasserrohrleitung 8 mit einem Blockheizkraftwerk einer Biogasanlage (hier nicht dargestellt) verbunden und wird darüber mit Warmwasser versorgt. Bei einer Vorlauftemperatur von etwa 90°C kann eine Trocknungslufttemperatur von etwa 80°C eingestellt werden. Geregelt wird die Lufttemperatur über ein Regelthermostat und eine Mischerschaltung in der Warmwasserversorgung (hier nicht dargestellt). Es ist in einer geänderten Anlagenkonfiguration auch möglich, die unter die Trocknungsluft untergemischten Rauchgase einer Verbrennung, z.B. auch die Abgase aus dem Biogas-BHKW, direkt zur Eindickung zu verwenden.

Der hier beschriebene Eindickungsprozess ist absatzweise.

Die Beschickung der Eindickkammer mit Rohgärrest (hier z.B. 5% TS; TS= Trockensubstanz) erfolgt mittels einer Zuführpumpe 9 und einer Zuleitung 10 aus einem Endlager 11 der Biogasanlage. Die Eindickkammer wird solange gefüllt, bis im Kammersumpf 12 der gewünschte Füllstand an Substrat (hier ca. 50 cm) erreicht ist.

Ist die Befüllung abgeschlossen, wird die Zuführpumpe 9 abgeschaltet und der Eindickungsprozess gestartet. Dabei handelt es sich um einen Umwälzprozess.

In diesem Beispiel sind in der linken Eindickkammerwand 13 als Sprüh- und Verteileinrichtung zwei sog. Prallteller 14 installiert. Diese haben sich in der Gülletechnik zur gleichmäßigen Ausbringung auf dem Feld bewährt. Diese Prallteller werden aus dem Kammersumpf mittels einer Pumpe 15 (hier fungierend als Umwälzpumpe) über ein Rohrleitungssystem 16 beschickt. In diesem Beispiel handelt es sich bei der Pumpe 15 um eine Exzenter-Schneckenpumpe.

Das Substrat wird in einer breiten Flugbahn 17 von Parabelform quer durch die Eindickkammer 2 verteilt und versprüht. Das Substrat prallt schließlich an eine Zwischenwand 18. Anschließend läuft das Substrat an der Zwischenwand hinunter zurück in den Kammersumpf 12 und bildet zwischen der unteren Kante der Zwischenwand und der Oberfläche des Substrats im Kammersumpf einen Substratvorhang 19.

Die Trocknungsluft durchströmt zunächst den durch die Prallteller erzeugten Produktnebel und wird dann durch den Spalt unterhalb der Zwischenwand und somit durch den Substratvorhang gezwungen. Hier kommt die Trocknungsluft nochmals intensiv mit dem Substrat in Kontakt, wodurch das Substrat Feuchtigkeit an die Trocknungsluft abgibt, die sich dabei gleichzeitig abkühlt. Durch den Abluftventilator 3 und über eine Abluftleitung 20 wird die feuchte Abluft 21 aus der Eindickkammer befördert. Die Abluft wird im vorliegenden Beispiel an die Umgebung abgeleitet. Emissionsrelevante Abluftinhaltsstoffe können über einen Abluftwäscher oder einen Biofilter (hier nicht dargestellt) abgetrennt werden.

Das Ende des Eindickungszyklus ist erreicht, wenn die erwünschte Trockensubstanzkonzentration im Substrat (hier z.B. 10% TS) erzielt ist. Dies kann z.B. über eine Feuchtemessung (hier nicht dargestellt) überprüft werden.

Es ist auch möglich, eine feste Trocknungszeit in der Steuerung vorzugeben. Eine andere Variante ist, die Überwachung der Feuchte und die Abschaltung über eine Wiegeeinrichtung (hier nicht dargestellt), z.B. über sog. Wiegestäbe, zu erreichen. Diese kann man unterhalb der Eindickkammer 2 oder unterhalb einer Rahmenkonstruktion 22 der Anlage anordnen.

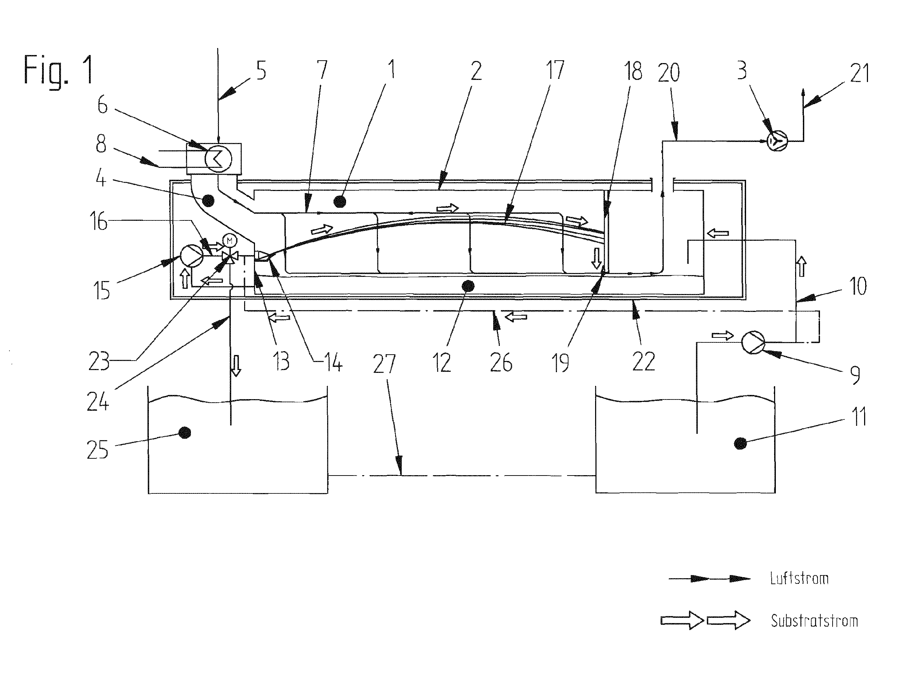

In Fig. 1 ist die Lüftungstechnik nur schematisch dargestellt. In der tatsächlichen Ausführung der hier beispielhaft beschrieben Anlage ist die Lüftungstechnik, bestehend aus Wärmetauscher 6, Ventilator 3 sowie das Luftleitungssystem 4, 20 gemeinsam in einem Container integriert.

Am Ende der Eindickungszeit wird die Eindickkammer entleert. Dazu wird ein 3-Wege-Ventil 23 im Rohrleitungssystem 16 so eingestellt, dass das Endsubstrat über eine Ablaufleitung 24 mit Hilfe der Pumpe 15 in einen Endsubstratbehälter 25 gepumpt wird. Ist die Eindickkammer 2, bzw. der Kammersumpf 12 leer, kann mit einem neuen Befüll- und Eindickungszyklus begonnen werden.

Neben dem beschriebenen absatzweisen Betrieb, ist auch ein teilkontinuierlicher oder ein kontinuierlicher Betrieb der Eindickungsanlage möglich.

Beim teilkontinuierlichen Betrieb wird durch getaktetes Umschalten des 3-Wege-Ventils 22 jeweils nur eine kleinere Menge an Endsubstrat aus dem Prozess ausgeschleust und die fehlende Menge jeweils über die Zuführpumpe 9 wieder aufgefüllt.

Beim kontinuierlichen Betrieb erfolgt die Beschickung der Prallteller direkt über die Zuführpumpe 9 und eine gesonderte Zuführleitung 26. Die Entleerung von überschüssigem Substrat erfolgt über die Pumpe 15. Da bei diesem Prozess gegebenenfalls nicht gleich der gewünschte Endtrockensubstanzgehalt erreicht wird, entleert die Pumpe 15 zurück in das Gärrestendlager 11, das sich so mit der Zeit immer weiter aufkonzentriert (Prinzip mit 27 angedeutet).

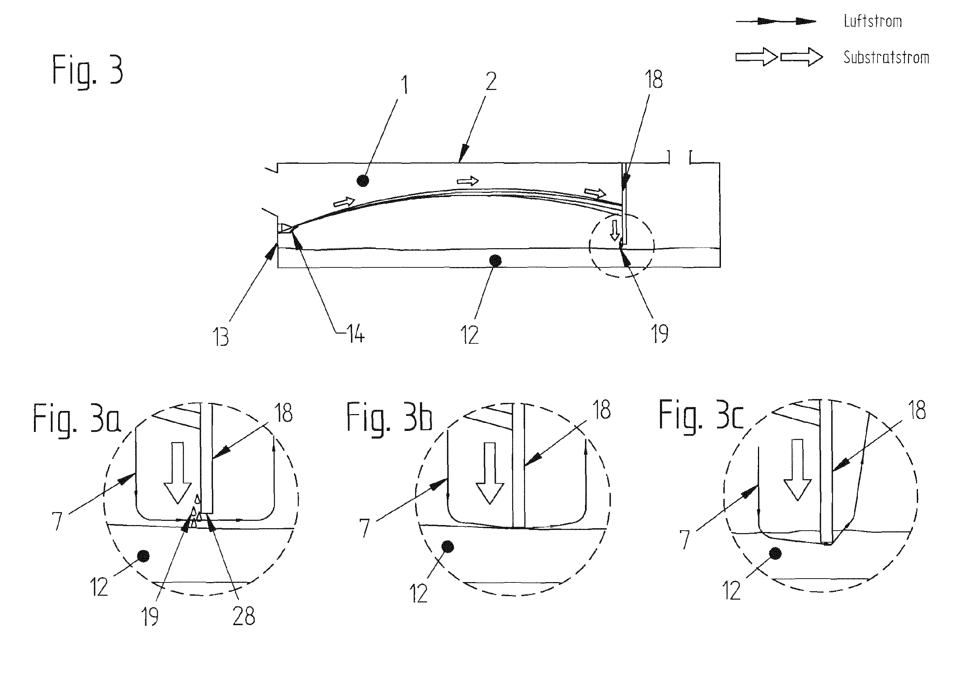

Mit Bezug auf Fig. 3a ist der Durchgangsspalt 28 von der Zwischenwand 18 zur Substratoberfläche im Kammersumpf 12 gezeigt. Das Substrat, das die Zwischenwand herunter läuft, bildet einen Tropfen-, d.h. Substratvorhang 19. Die Trocknungsluft 7 muss diesen durchströmen.

Gemäß Fig. 3b ist der Füllstand im Kammersumpf 12 so hoch, bzw. die Zwischenwand 18 so abgesenkt, dass die Trocknungsluft 7 unter der Zwischenwand hindurchgedrückt wird.

Gemäß Fig. 3c taucht die Zwischenwand 18 in das Substrat im Kammersumpf 12 ein, sodass sich die Trocknungsluft 7, bei erhöhtem Druckverlust, in Luftblasen einen Weg durch das Substrat im Kammersumpf sucht.

Neben den dargestellten Varianten der Zwischenwand sind auch geometrische Ausführungsvarianten dieser Zwischenwand denkbar. Diese Wand kann perforiert sein, die Wand kann gewölbt, wellenförmig oder gekantet sein. Die Wand kann zur Luft- oder Substratführung angepasst sein (Tropfnasen, aerodynamische Abrundung,...). Solche Formgebungs-Maßnahmen erhöhen den Luftdurchgang und Stoffübertrag.

Grundsätzlich ist für den Behälter auch eine zentrische Ausführung denkbar mit zentraler Produktverteilung und zentrisch angeordneter Zwischen- und Außenwand.

### Bezugszeichenl iste:

- 1: Eindicker
- 2: Eindickkammer
- 3: Abluftventilator
- 4: Zuluftleitung
- 5: Umgebung
- 6: Wärmetauscher
- 7: Trocknungsgas
- 8: Warmwasserrohrleitung
- 9: Zuführpumpe
- 10: Zuleitung
- 11: Endlager
- 12: Kammersumpf
- 13: Eindickkammerwand
- 14: Prallteller
- 15: Pumpe
- 16: Rohrleitungssystem
- 17: Flugbahn
- 18: Zwischenwand (Prallblech)
- 19: Substratvorhang
- 20: Abluftleitung
- 21: Abluft
- 22: Rahmen der Anlage
- 23: Ventil
- 24: Ablaufleitung
- 25: Endsubstratbehälter
- 26: Zuführleitung
- 28: Durchgangsspalt

## Patentansprüche

1. Eindicker (1) zum Entziehen eines wässrigen Anteils eines einzudickenden Substrates mittels eines Warm-/Heißgases als Trocknungsgas (7), welches Trocknungsgas zusammen mit dem Substrat eine Eindickkammer (2) des Eindickers (1) durchströmt,
**dadurch gekennzeichnet, dass** eine das Substrat beschleunigende Pumpe (15) vorgesehen ist, mit der das Substrat über mindestens eine Verteileinrichtung in die mit Trocknungsluft belüftete Eindickkammer (2) einbringbar ist.

2. Eindicker nach Anspruch 1, **dadurch gekennzeichnet, dass** die mindestens eine Verteileinrichtung eine Düse oder ein Prallteller (14) ist.

3. Eindicker nach einem der Ansprüche 1 oder 2,
**dadurch gekennzeichnet, dass** in der Eindickkammer (2) eine Zwischenwand (18) zum Abbremsen von beschleunigtem Substrat angeordnet ist.

4. Eindicker nach Anspruch 3,
**dadurch gekennzeichnet, dass** die Zwischenwand (18) in der Eindickkammer (2) derart im Durchstrombereich des Trocknungsgases angeordnet ist, dass die Zwischenwand den Durchstrom an Trocknungsgas hemmt.

5. Eindicker nach Anspruch 4,
**dadurch gekennzeichnet, dass** die Zwischenwand (18) einen Durchgangsspalt (28) für das Trocknungsgas zum Boden der Eindickkammer (2) hin bildet.

6. Eindicker nach einem der Ansprüche 3 bis 5,
**dadurch gekennzeichnet, dass** die Zwischenwand (18) justierbar in der Eindickkammer (2) gehalten ist.

7. Eindicker nach einem der Ansprüche 1 bis 6,
**dadurch gekennzeichnet, dass** eine Umwälzpumpe vorgesehen ist, mit der am Boden der Eindickkammer (2) angesammeltes Substrat zur Verteileinrichtung rezirkuliert wird.

8. Eindicker nach einem der Ansprüche 1 bis 7,
**dadurch gekennzeichnet, dass** ein Wärmetauscher (6) zum Beheizen des Trocknungsgases (7) vorgesehen ist.

9. Eindicker nach einem der Ansprüche 1 bis 8,
**dadurch gekennzeichnet, dass** ein Heizkessel oder ein Lufterhitzer zum Erwärmen des Trocknungsgases vorgesehen ist.

10. Eindicker nach einem der Ansprüche 1 bis 9,
**dadurch gekennzeichnet, dass** ein Gebläse (3) zum Befördern des Trocknungsgases (7) durch die Eindickkammer (2) vorgesehen ist.

11. Eindicker nach einem der Ansprüche 1 bis 10, der in einem Container integral eingebaut ist.

12. Verwendung eines Eindickers nach einem der vorstehenden Ansprüche 1 bis 11 zum Eindicken von Gülle oder Gärrest aus Biogasanlagen oder Klärschlamm.
